# FASCICULE DE BREVET EUROPEEN

(11) **EP 0 759 004 B1**
(45) Date de publication et mention de la délivrance du brevet: **12.08.1998**
(21) Numéro de dépôt: 95916544.0
(22) Date de dépôt: 05.05.1995
(51) Int. Cl.: B65H 75/36, G02B 6/44

(54) **PROCEDE ET DISPOSITIF DE STOCKAGE SOUS FORME D'ENROULEMENT POUR CABLES OU AUTRES ELEMENTS**
VERFAHREN UND VORRICHTUNG ZUM WICKELFÖRMIGEN SPEICHERN VON KABELN ODER DERGLEICHEN
METHOD AND DEVICE FOR STORING ROLLED-UP CABLES AND THE LIKE

(30) Priorité: 11.05.1994 CH 1480/94
(43) Date de publication de la demande: 26.02.1997
(73) Titulaire: PLUMETTAZ SA, 1880 Bex (CH)
(72) Inventeur: WACINSKI, Andrzej, CH-1891 Massongex (CH); PLUMETTAZ, Gérard, CH-1880 Bex (CH)
(74) Mandataire: BOVARD AG - Patentanwälte
(86) Numéro de dépôt international: CH9500104
(87) Numéro de publication internationale: WO9531392

(56) Documents cités:
- EP-A- 0 008 352
- EP-A- 0 296 860
- FR-A- 2 015 977

## Description

La présente invention concerne un procédé de stockage sous forme d'enroulement utilisée avantageusement pour les câbles, mais également pour d'autres éléments enroulables tels des boyaux, tuyaux, tubes ou autres profils quelconques dont le stockage s'effectue avantageusement sous forme d'enroulement dans un panier de stockage. L'invention comprend également le dispositif de stockage correspondant.

Ce type de dispositif est particulièrement avantageux pour des câbles de tous types, y compris des câbles optiques, présentant une certaine rigidité, c'est-à-dire aptes à supporter une contrainte de compression axiale déterminée, sans flambage excessif.

Lors de l'installation de câbles souterrains, il arrive fréquemment que les longueurs à installer soient considérables. Ceci est particulièrement courant avec les câbles de type optique étant donné qu'on cherche toujours à minimiser le nombre d'épissures, celles-ci affectant considérablement la qualité du signal. Ainsi, selon la pratique courante, on installe tout d'abord une première portion de câble dans un premier tube se dirigeant dans une direction donnée sur plusieurs dizaines ou centaines de mètres. Lorsque le câble a atteint l'extrémité de ce premier tronçon, il reste encore une partie du câble enroulée autour du rouleau sur lequel le câble est livré. Cette seconde portion de câble est destinée à être installée dans un second tube dont l'ouverture est à proximité du premier, ce deuxième tube pouvant être orienté selon une direction sensiblement différente de celle du premier tube. En installant ainsi deux portions de câbles, on arrive à parcourir des distances plus importantes sans épissure. Pour installer cette deuxième portion de câble, on doit tout d'abord dérouler celui-ci du rouleau ou chariot qui le porte afin d'avoir accès à l'extrémité qui devra être introduite en premier lieu dans l'ouverture du deuxième tube.

Selon la pratique courante, pour dérouler cette deuxième portion de câble, il est nécessaire d'effectuer un stockage intermédiaire de celui-ci. Une méthode connue consiste à dérouler le câble sur le sol en formant deux cercles juxtaposés. Cette méthode est souvent désignée par l'expression "figure-8 technique". Elle présente de nombreux inconvénients: la formation des cercles nécessite beaucoup de place et de main d'oeuvre et requiert un certain nombre de précautions particulières sans lesquelles le câble se salit. Cette méthode présente par ailleurs des risques pour l'intégrité du câble, est lente et donc coûteuse.

Le "Van Den Akker Reel" représente une alternative intéressante à cette première méthode puisque le câble n'est plus nécessairement disposé sur le sol. Par contre, les étapes successives d'enroulement et de déroulement nécessitent encore une fois temps et main d'oeuvre. Par ailleurs, il est toujours nécessaire de former des boucles en forme de 8 sur une portion de la longueur du câble.

Plusieurs documents présentent des méthodes ou dispositifs d'enroulement utilisables pour un stockage de câble. DE-C-22 02 177, FR-A-2 015 977 et EP-A 0 008 352 décrivent des dispositifs d'enroulement/déroulement d'un câble dans une cuve cylindrique, nécessitant des moyens d'entraînement du câble et/ou d'un bras de pose, impliquant le cas échéant des moyens de synchronisation entre les moyens d'entraînement du câble et ceux de mise en rotation du bras de pose. EP-A-0 389 303 décrit un système de stockage pour une fibre optique, la mise en rotation du bras de pose étant provoquée par un jet de gaz. Le document américain RE 34 488 décrit un dispositif d'enroulement autour d'une bobine à axe horizontal. Ce type de dispositif, très imposant, requiert de puissants moyens moteur afin de réaliser l'enroulement. Par ailleurs, une telle installation nécessite de nombreux moyens destinés à augmenter la sécurité d'utilisation (en particulier pour éviter tout contact avec les éléments en rotation). Le coût de tels dispositifs est donc très élevé et leur utilisation plus compliquée, par rapport à une installation comportant peu ou pas d'élément rotatif et aucun moyen moteur

L'art antérieur le plus proche de l'invention est représenté par EP-B-0 296 860 qui décrit un dispositif de stockage pouvant être utilisé comme stockage intermédiaire selon un mode de pose d'un câble assez semblable à celui décrit précédemment. Ce dispositif comporte lui aussi des moyens mécaniques de mise en rotation d'un bras de pose, lesdits moyens devant en conséquence être synchronisés avec les moyens d'entraînement du câble. Afin de pouvoir ressortir l'extrémité inférieure du câble introduite sur le fond du panier de stockage, il est nécessaire d'effectuer un certain nombre de manipulations audit panier, dont en particulier une opération de retournement. Le dispositif avec le câble qu'il contient ne peut donc être trop lourd ni trop encombrant et ne peut donc être favorablement utilisé qu'avec des câbles optiques de faible masse.

Un premier but de l'invention est de proposer un procédé permettant d'enrouler un élément enroulable dans un panier prévu à cet effet en utilisant les propriétés mécaniques dudit élément, en particulier sa rigidité, pour produire l'enroulement, évitant ainsi l'utilisation de moyens moteurs destinés à entraîner une ou plusieurs pièces en rotation, ainsi que de moyens de synchronisation afin de disposer correctement ledit élément à l'intérieur du panier. Afin d'atteindre ce but, le procédé selon l'invention comporte les caractéristiques des revendications 1 et 2.

Un autre but de l'invention est de proposer un dispositif permettant de réaliser l'enroulement de la manière décrite ci-dessus, ce but étant atteint grâce à un dispositif conforme aux revendications 3 à 10.

Les revendications 11 à 13 prévoient divers modes d'utilisation du dispositif selon l'invention.

Le procédé et le dispositif selon l'invention permettent d'éviter de salir l'élément à enrouler puisque celui-ci n'est pas disposé sur le sol. La mise en oeuvre du procédé nécessite peu de main d'oeuvre, peu de manipulations et les vitesses d'enroulement, respectivement de déroulement atteintes sont très élevées.

Grâce au présent procédé et au présent dispositif, on peut réaliser le stockage en tout endroit, d'un câble ou de tout autre élément tels des boyaux, tuyaux ou tubes ou autres profils quelconques dont le stockage s'effectue avantageusement sous forme d'enroulement, de façon rapide, simple et économique. L'élément à enrouler doit simplement présenter une rigidité axiale ou longitudinale suffisante pour s'enrouler par lui-même, comme décrit ultérieurement. On peut par ailleurs aisément stocker un élément même sans avoir accès à son extrémité, ce qui est particulièrement avantageux pour le stockage intermédiaire lors de l'installation de câbles et notamment de câbles comportant une ou plusieurs fibres optiques.

L'élément est enroulé grâce à ses propriétés mécaniques, en particulier sa rigidité axiale ou longitudinale. Grâce à cette particularité, aucun moyen moteur spécifique au bras d'enroulement n'est requis. Selon le mode de réalisation utilisé, ce même bras est lui-même facultatif. Pour l'enroulement de câbles, on peut par ailleurs utiliser le moyen d'acheminement du câble déjà utilisé sur le site d'installation pour introduire le câble dans les tubes de logement, pour acheminer le câble vers le dispositif de stockage selon l'invention.

Le présent dispositif est de conception simple, léger, peu coûteux et fiable. L'enroulement du câble est libre, celui-ci n'étant pas guidé vers une position particulière à chaque tour. Le dispositif est aisément transportable, d'autant plus qu'une version partiellement ou totalement rétractable ou repliable est facilement mise en oeuvre. Le transport, l'entreposage, la maniabilité et l'extraction totale ou partielle de l'élément enroulé sont ainsi grandement facilités.

Il n'est pas nécessaire de reconfigurer le dispositif pour passer de l'opération d'enroulement à celle de déroulement de l'élément.

Dans la description qui suit, l'invention est décrite en se référant au domaine d'application des câbles. L'homme du métier comprendra toutefois que pour d'autres types d'utilisation, il suffit de remplacer le mot "câble" par "élément enroulable". Cet élément pouvant être par exemple, un boyau, tuyau, tube, ou un profil quelconque dont le stockage s'effectue avantageusement sous forme d'enroulement.

L'invention est exposée ci-après de façon plus détaillée, à l'aide du dessin annexé comprenant les figures suivantes:
la figure 1 représente une vue en perspective d'une première forme d'exécution d'un dispositif de stockage selon l'invention; et
la figure 2 représente une autre forme d'exécution du dispositif de stockage, avec bras rotatif.

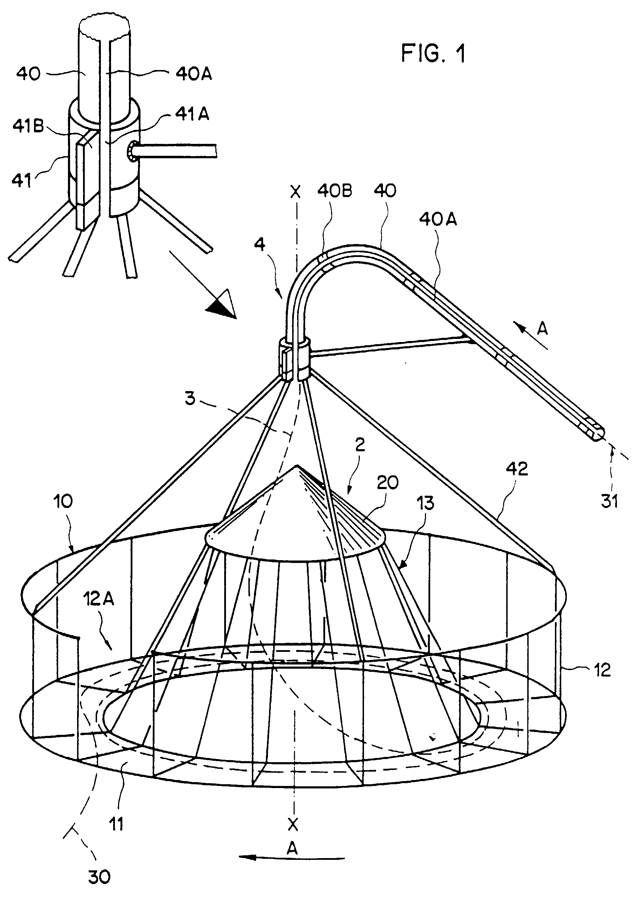

A la figure 1, on voit que le dispositif de stockage 1 comprend essentiellement un panier de stockage 10, de forme essentiellement cylindrique ayant une section droite en forme de couronne circulaire, constitué d'un fond 11 unissant deux parois latérales, une paroi externe 12 et une paroi interne 13. Le fond 11 ainsi que les parois 12 et 13 peuvent présenter une surface pleine et uniforme, ou encore une surface en treillis tel que représenté sur la figure. La paroi externe 12 s'élève depuis le fond 11 sur lequel elle est fixée, jusqu'à une hauteur donnée permettant de procurer un appui latéral retenant le câble à enrouler. La paroi interne 13 s'élève depuis le fond 11 sur lequel elle est également fixée, jusqu'à une hauteur donnée en général supérieure à celle de la paroi externe. Afin de pouvoir utiliser le dispositif pour un stockage intermédiaire, il est nécessaire que la paroi externe 12 présente une ouverture latérale 12A permettant d'introduire une portion du câble 3 selon la manière qui sera décrite ultérieurement. Un moyen de pose de câble fixe 2 est disposé dans la portion centrale du panier de stockage 10. Sur la forme d'exécution illustrée à la figure 1, le moyen de pose 2 est conformé par la paroi interne 13 qui est inclinée vers l'intérieur de façon à former un tronc de cône. Le dessus de ce tronc de cône est avantageusement fermé par un couvercle convexe 20 dont le contour de la base correspond à celui de la périphérie supérieure libre de la paroi interne 13. Selon différentes variantes, on prévoit un moyen de pose fixe 2 partiellement conique, conformé en une seule ou plusieurs pièces, dont la paroi est entièrement pleine ou partiellement pleine, comme par exemple sous forme de treillis, etc.

Un moyen de guidage 4 est disposé dans le prolongement du moyen de pose fixe 2. Le moyen de guidage 4 est composé ici essentiellement d'un tube de guidage 40 et d'une bague 41 constituée de préférence de manière pivotante. Le tube de guidage 40 peut être métallique ou en matériau synthétique, avec une paroi interne lisse, à faible coefficient de frottement; le diamètre intérieur dudit tube est évidemment supérieur au diamètre extérieur du câble ou de l'élément à stocker. Le moyen de guidage 4 est soutenu par tout moyen approprié, par exemple une ou plusieurs tiges 42 s'étendant depuis la paroi externe 12, tel qu'illustré. La portion inférieure de la bague 41 est fixée auxdites tiges 42, alors que la portion supérieure de ladite bague, de préférence pivotante par rapport à la portion inférieure, reçoit une extrémité du tube de guidage 40. Pour un bon fonctionnement du dispositif, il est avantageux que le moyen de guidage 4, respectivement la bague 41 et l'extrémité du tube de guidage 40 qui lui est jointe, le moyen de pose 2 ainsi que les deux parois 12 et 13, soient disposés de façon coaxiale suivant un axe virtuel X-X pouvant être celui du panier de stockage 10. Au cas où la bague 41 est pivotante, le tube de guidage 40 peut pivoter autour de l'axe X-X, afin de s'orienter automatiquement en direction de la bobine (non représentée sur la figure) de laquelle le câble 3 est déroulé ou vers le tube vers lequel le câble est ensuite repris du panier de stockage pour être posé. Pour les mêmes raisons que mentionnées précédemment relativement à l'ouverture 12A de la paroi 12 du panier, des ouvertures latérales 40A et 41A sont prévues sur le tube de guidage 40 ainsi que sur la bague 41, de manière à pouvoir y introduire le câble latéralement. Des moyens idoines 40B et 41B, connus de l'homme du métier, permettent de refermer lesdites ouvertures afin d'empêcher une sortie intempestive du câble.

Un moyen d'entraînement de câble, non représenté sur la figure, peut venir compléter le dispositif sans directement faire partie du dispositif selon l'invention, étant disposé sur la portion libre du câble entrant ou sortant de l'extrémité du tube de guidage 40 éloignée de la bague 41. Ce moyen d'entraînement peut être un moyen connu, comme par exemple un entraînement à chenilles ou à poulies d'adhérence.

On peut décrire maintenant une opération de pose d'un câble utilisant un dispositif selon l'invention. L'extrémité du câble en provenance de la couche de spires supérieure d'une bobine sur laquelle le câble est enroulé, généralement une bobine à axe horizontal, a été tirée et posée dans une première longueur de tube selon une technique connue. ll s'agit maintenant de retirer le solde de longueur de câble encore enroulé sur la bobine afin d'accéder à l'autre extrémité du câble, pour ensuite pouvoir l'introduire dans un deuxième tube le long duquel le solde de longueur de câble sera ultérieurement tiré. Pour ceci, on dispose un dispositif selon l'invention sur la longueur libre du câble 3, entre la bobine et l'entrée du premier tube. Le câble 3 est introduit dans le dispositif 1 en le faisant passer par l'ouverture 12A de la paroi 12 ainsi que par les ouvertures latérales 40A et 41A, lesquelles sont ensuite refermées afin de maintenir le câble 3. Comme représenté sur la figure 1, l'extrémité 30 du câble 3 sortant par l'ouverture 12A est celle dirigée vers la portion de câble déjà posée dans le premier tube alors que l'extrémité 31 sortant du tube de guidage 40 est celle dirigée vers le moyen d'entraînement mentionné précédemment puis vers la bobine contenant encore le solde de longueur de câble. En actionnant le moyen d'entraînement, on peut transporter le câble 3 depuis la bobine vers le panier de stockage 10. Comme on le voit sur la figure, le câble 3 passe par le tube de guidage 40, qui éventuellement a pu s'orienter en direction de la bobine si la bague 41 est pivotante, passe par ladite bague et pénètre selon l'axe X-X dans l'espace situé au-dessus du panier 10. Il bute tout d'abord sur le couvercle convexe 20 du moyen de pose 2 et vient donc s'appuyer sur ledit couvercle puis sur la paroi interne inclinée 13. On peut constater sur la figure, qu'en imposant un mouvement de translation au câble 3, dans le sens de la flèche A, celui-ci vient s'appuyer le long des surfaces 20 et 13 tout en effectuant un virage d'environ 90° vers l'arrière et par réaction, de par sa rigidité longitudinale, vient ensuite s'enrouler sur le fond 11 du panier 10. Un certain nombre de spires sont ainsi enroulées dans le panier 10, jusqu'à ce que l'extrémité du câble 3 disposée sur la couche inférieure de la bobine soit libérée et puisse être introduite dans le deuxième tube. ll suffit alors de renverser le sens d'entraînement du moyen d'entraînement pour ressortir le câble 3 du panier 10 et le poser dans le deuxième tube. Lorsque la dernière spire a été déroulée du panier 10, tout le dispositif 1 peut être alors facilement dégagé du câble 3 par les ouvertures 12A, 40A et 41A.

Le dispositif 1 peut aussi être utilisé pour un transbobinage, c'est-à-dire pour inverser le sens de déroulement d'un câble. Dans ce cas, l'extrémité 30 du câble peut être introduite par l'extrémité libre du tube de guidage 40, puis éventuellement fixée sur le fond 11. Après enroulement du câble dans le panier 10, le câble pourra être dévidé en sens inverse.

On constate donc que pour l'exécution de toutes les opérations décrites, le dispositif d'entreposage 1 selon cette première forme d'exécution de l'invention est très simple de conception et d'utilisation, ne comportant aucune pièce en mouvement lors du stockage/déstockage du câble et en conséquence aucun moyen d'entraînement propre ou de synchronisation et nécessitant peu de manipulations et de personnel pour son usage, l'enroulement du câble étant réalisé correctement grâce à sa rigidité longitudinale.

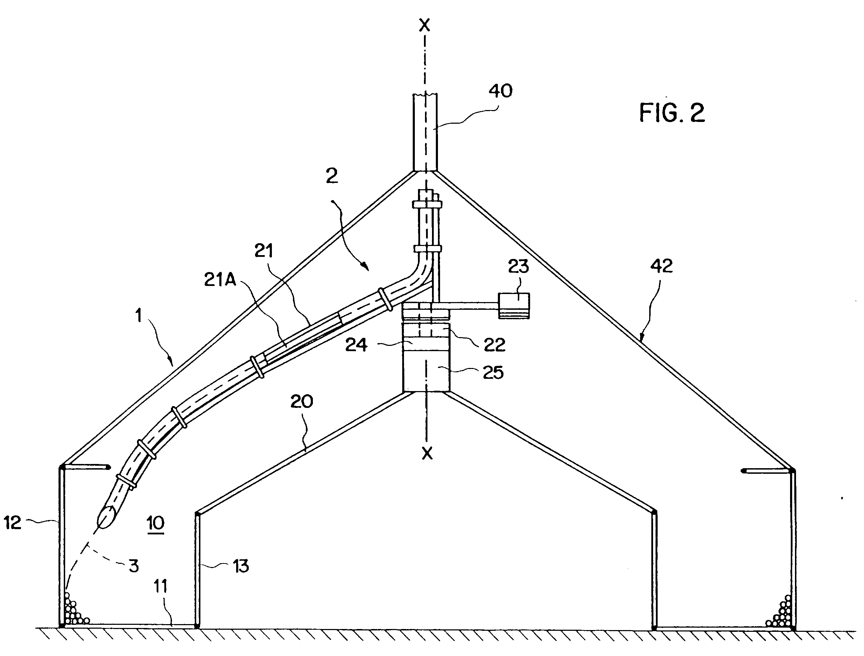

Pour des câbles ayant une rigidité qui ne permettrait pas un enroulement correct comme ci-dessus, la deuxième forme d'exécution d'un dispositif selon l'invention représentée à la figure 2 possède un tube de pose 21 aidant au bon enroulement du câble 3 dans le panier 10. Le tube de pose 21 est pivotant autour de l'axe X-X, supporté par des moyens de rotation 22 connus, puis soit par un bâti interne constitué de la paroi interne 13 et du couvercle convexe 20 qui ne servent ici que de moyen de limitation de l'espace dévolu au câble et de moyen de support, soit par un bâti externe constitué de la paroi externe 12 et des tiges 42. Un contrepoids 23 assure l'équilibre statique du tube de pose 21. Pour les mêmes raisons que mentionnées précédemment, le tube de pose 21 possède une ouverture latérale 21A afin d'y introduire le câble 3. L'extrémité inférieure du tube de pose 21 pénètre à l'intérieur du panier 10 et est dirigée vers l'arrière et de préférence en direction de la paroi extérieure 12, imposant ainsi le virage nécessaire à l'enroulement du câble. Lors de l'enroulement du câble, celui-ci grâce à sa rigidité longitudinale suffisante repousse vers l'avant le tube de pose 21, le faisant pivoter autour de l'axe X-X. De cette manière le câble 3 se pose correctement dans le panier 10, étant guidé principalement par la paroi externe 12. Lors du dévidage, le tube de pose 21 pivotera en sens inverse, la paroi interne 13 servant alors de guide afin de limiter le resserrement de la spire en cours de dévidage. De préférence, le moyen de roulement 22 comprend un moyen de freinage 24, par exemple à friction, imposant un léger couple de freinage à la rotation du bras de pose 21 lors de l'enroulement du câble dans le panier afin de stabiliser la répartition du couple de torsion sur la longueur du câble, alors qu'aucun freinage n'est imposé lors du déroulement du câble. Le dispositif peut aussi comprendre un moyen de réglage de hauteur du bras de pose, schématisé en 25, permettant d'ajuster la hauteur de l'extrémité libre du bras de pose 21 dans le panier 10, afin de faciliter la disposition du câble à l'intérieur de celui-ci lors de l'enroulement d'un câble de grande longueur. Le moyen de réglage de hauteur 25 peut être commandé manuellement ou automatiquement.

Comme la précédente, cette forme d'exécution du dispositif de stockage selon l'invention est très simple de conception et d'utilisation; elle ne comprend qu'une seule pièce mobile, le bras de pose 21 qui ne nécessite aucun moyen d'entraînement propre et par conséquent de synchronisation avec l'avance du câble, la rotation du bras de pose 21 étant directement provoquée par l'avance du câble, dans un sens ou dans l'autre. Le dispositif selon cette dernière forme d'exécution est aussi muni des ouvertures latérales nécessaires à l'introduction du câble.

Diverses variantes de construction peuvent être envisagées, en particulier, les parois 12 et/ou 13 peuvent ne pas être verticales, mais inclinées dans un sens ou dans l'autre afin de faciliter l'enroulement, respectivement le déroulement du câble dans le panier 10; de même, la confection du tube de guidage 40 et/ou du tube de pose 20, chacun muni de son ouverture latérale ainsi que de moyens de fermeture peut s'avérer être assez délicate. Un résultat semblable peut être obtenu par une succession d'anneaux, disposés le long d'une barre de forme adéquate, chaque anneau comportant une ouverture latérale dont la direction est décalée de celle de l'anneau qui le précède. De cette manière le câble est introduit successivement dans chaque anneau, l'alternance des portions pleines et des ouvertures des anneaux suffisant au maintien du câble. Le dispositif de stockage, selon l'une ou l'autre des formes d'exécution décrites est de préférence démontable ou repliable afin de pouvoir plus facilement être transporté sur le chantier de pose.

Le dispositif peut également être utilisé avec la méthode et le moyen décrits dans le document EP-A-0 292 037. Des essais effectués à l'aide d'un tel système ont permis d'atteindre des vitesses d'enroulement/déroulement de l'ordre de 1 à 5 m/s.

## Revendications

1. Procédé de stockage d'un élément enroulable (3) dans un dispositif de stockage (1), comportant un panier de stockage (10), un moyen de guidage (4), et un moyen de pose fixe ou rotatif (2), dans lequel, après avoir passé par le moyen de guidage, l'élément enroulable est ensuite conduit vers le panier de stockage en coulissant le long du moyen de pose (2), de façon à s'enrouler naturellement sous l'effet de sa rigidité longitudinale dans le panier de stockage, caractérisé en ce que l'élément enroulable (3) est introduit dans le dispositif, respectivement retiré du dispositif par des ouvertures latérales (12A,21A,41A,40A) du panier (10), du moyen de guidage (4) et du moyen de pose (2) dans le cas où ledit moyen de pose est de type rotatif,

2. Procédé de stockage selon la revendication 1, caractérisé en ce que l'entraînement du moyen de pose rotatif (2) n'utilise aucun moyen motorisé et est obtenu par réaction au mouvement d'avance de l'élément enroulable, due à la rigidité longitudinale dudit élément.

3. Dispositif de stockage (1) pour élément enroulable (3) comprenant un panier de stockage (10) formé notamment par une paroi externe (12), disposée contre le pourtour d'un fond (11) servant de base d'enroulement, un moyen de guidage (4), un moyen de pose fixe ou rotatif (2), destiné à conduire angulairement l'élément à enrouler (3) depuis le moyen de guidage (4) vers le panier de stockage, caractérisé en ce que des ouvertures latérales (12A, 21A, 41A, 40A) sont aménagées dans la paroi externe (12), dans le moyen de guidage (40A,41A) et dans le moyen de pose (2) dans le cas où le moyen de pose est de type rotatif, pour une introduction latérale de l'élément enroulable (3).

4. Dispositif de stockage selon la revendication 3 caractérisé en ce que le moyen de pose (2) est fixe et est constitué d'un couvercle convexe de forme conique (20) disposé dans le prolongement d'une paroi interne (13) du panier (10).

5. Dispositif de stockage selon la revendication 3 caractérisé en ce que le moyen de pose (2) est rotatif et est constitué d'au-moins un segment tubulaire (21), essentiellement radial, s'étendant depuis un endroit proche d'une extrémité du moyen de guidage (4) jusque dans le panier de stockage (10), ledit segment tubulaire étant pivotant autour d'un axe correspondant à l'axe virtuel (X-X) du dispositif.

6. Dispositif de stockage selon la revendication 5, caractérisé en ce qu'il ne comporte aucun moyen motorisé d'entraînement du moyen de pose (2).

7. Dispositif de stockage selon l'une des revendications 5 ou 6, caractérisé en ce que le moyen de pose rotatif (2) comprend un moyen de freinage (24) du segment tubulaire (21).

8. Dispositif de stockage selon l'une des revendications 5 à 7, caractérisé en ce Que le moyen de pose rotatif (2) comprend un moyen de réglage en hauteur (25) de l'extrémité du segment tubulaire (21) dans le panier.

9. Dispositif de stockage selon la revendication 3, caractérisé en ce qu'au moins une des ouvertures latérales (1 2A,21A,41A,40A) est obturable.

10. Dispositif de stockage selon l'une des revendications 3 à 9, caractérisé en ce que le moyen de guidage (4) comporte au-moins un segment tubulaire (40) disposé essentiellement radialement à l'extérieur dudit dispositif, ledit segment tubulaire étant pivotant autour d'un axe correspondant à l'axe virtuel (XX) dudit dispositif.

11. Utilisation d'un dispositif de stockage (1 ) selon l'une des revendications 3 à 10 lors de la pose d'un câble, une première longueur de câble (30) ayant déjà été posée, une longueur libre de câble (3) étant introduite dans le dispositif (1) par les ouvertures latérale (12A,21A,41A,40A), le solde de longueur (31) du câble étant alors enroulée dans le panier (10), puis étant reprise dudit panier pour être posée, une dernière longueur libre du câble étant ensuite retirée du dispositif par les mêmes ouvertures latérales.

12. Utilisation d'un dispositif de stockage selon l'une des revendications 3 à 10 pour le transbobinage d'un câble.

13. Utilisation d'un dispositif de stockage selon l'un des modes, correspondant aux revendications 11 ou 12, dans laquelle le câble comprend au-moins une fibre optique.

## Patentansprüche

1. Verfahren zum Lagern eines aufrollbaren Elementes (3) in einer Lagervorrichtung (1), enthaltend einen Lagerkorb (10), ein Führungsmittel (4) und ein festes oder drehbares Legemittel (2), in welcher, nachdem es durch das Führungsmittel passiert ist, das aufrollbare Element anschliessend gegen den Lagerkorb geführt wird, indem es entlang dem Legemittel (2) gleitet, derart dass es sich unter der Wirkung seiner Längssteifigkeit im Lagerkorb natürlich aufrollt, dadurch gekennzeichnet, dass das aufrollbare Element (3) durch laterale Öffnungen (12A, 21A, 41A, 40A) des Korbes (10), des Führungsmittels (4) und des Legemittels (2) im Fall, in dem das besagte Legemittel vom drehbaren Typ ist, in die Vorrichtung eingeführt beziehungsweise aus der Vorrichtung zurückgezogen wird.

2. Verfahren zum Lagern nach dem Anspruch 1, dadurch gekennzeichnet, dass der Antrieb des drehbaren Legemittels (2) keine motorisierten Mittel benutzt und durch Reaktion auf die Vorwärtsbewegung des aufrollbaren Elementes infolge der Längssteifigkeit des besagten Elementes erreicht wird.

3. Vorrichtung (1) zum Lagern für ein aufrollbares Element (3), enthaltend einen insbesondere durch eine äussere Wand (12) gebildeten Lagerkorb (10), der am Umfang eines Bodens (11) angeordnet ist, welcher als Grundfläche für das Aufrollen dient, ein Führungsmittel (4), ein festes oder drehbares Legemittel (2), das dazu bestimmt ist, das aufzurollende Element (3) winklig vom Führungsmittel (4) gegen den Lagerkorb zu führen, dadurch gekennzeichnet, dass laterale Öffnungen (12A, 21A, 41A, 40A) in der äusseren Wand (12), im Führungsmittel (40A, 41A) und im Legemittel (2) im Fall, in dem das Legemittel vom drehbaren Typ ist, angeordnet sind für eine laterale Einführung des aufrollbaren Elementes (3)

4. Vorrichtung zum Lagern nach dem Anspruch 3, dadurch gekennzeichnet, dass das Legemittel (2) fest ist und aus einem konvexen Deckel mit konischer Form (20) aufgebaut ist, der in der Verlängerung einer inneren Wand (13) des Korbes (10) angeordnet ist.

5. Vorrichtung zum Lagern nach dem Anspruch 3, dadurch gekennzeichnet, dass das Legemittel (2) drehbar ist und aus mindestens einem im wesentlichen radialen rohrförmigen Segment (21) aufgebaut ist, das sich von einem Ort nahe einem Ende des Führungsmittels (4) bis in den Lagerkorb (10) erstreckt, wobei das besagte rohrförmige Segment um eine Achse drehbar ist, die der virtuellen Achse (X-X) der Vorrichtung entspricht.

6. Vorrichtung zum Lagern nach dem Anspruch 5, dadurch gekennzeichnet, dass sie keine motorisierten Mittel zum Antrieb des Legemittels (2) enthält.

7. Vorrichtung zum Lagern nach einem der Ansprüche 5 oder 6, dadurch gekennzeichnet, dass das drehbare Legemittel (2) ein Bremsmittel (24) für das rohrförmige Segment (21) enthält.

8. Vorrichtung zum Lagern nach einem der Ansprüche 5 bis 7, dadurch gekennzeichnet, dass das drehbare Legemittel (2) ein Mittel (25) zum Regeln der Höhe des Endes des rohrförmigen Segmentes (21) im Korb enthält.

9. Vorrichtung zum Lagern nach dem Anspruch 3, dadurch gekennzeichnet, dass mindestens eine der lateralen Öffnungen (12A, 21A, 41A, 40A) verschliessbar ist.

10. Vorrichtung zum Lagern nach einem der Ansprüche 3 bis 9, dadurch gekennzeichnet, dass Führungsmittel (4) mindestens ein rohrförmiges Segment (40) enthält, das im wesentlichen radial ausserhalb der besagten Vorrichtung angeordnet ist, wobei das besagte rohrförmige Segment um eine Achse drehbar ist, die der virtuellen Achse (X-X) der Vorrichtung entspricht.

11. Verwendung einer Vorrichtung (1) zum Lagern nach einem der Ansprüche 3 bis 10 während des Legens eines Kabels, wobei eine erste Kabellänge (30) bereits gelegt ist, eine freie Kabellänge (3) durch die lateralen Öffnungen (12A, 21A, 41A, 40A) in die Vorrichtung (1) eingeführt ist, der Rest (31) der Kabellänge dann im Korb (10) aufgerollt ist, dann wieder aus dem besagten Korb entnommen wird, um gelegt zu werden und eine letzte freie Länge des Kabels anschliessend durch die selben lateralen Öffnungen aus der Vorrichtung zurückgezogen wird.

12. Verwendung einer Vorrichtung zum Lagern nach einem der Ansprüche 3 bis 10 zum Umspulen eines Kabels.

13. Verwendung einer Vorrichtung zum Lagern nach einer der Arten entsprechend den Ansprüchen 11 oder 12, in welcher das Kabel mindestens eine optische Faser enthält.

## Claims

1. Process for stocking a coilable element (3) in a stocking device (1), comprising a stocking basket (10), a guide means (4) and a fixed or rotary laying means (2), in which, after having passed through the guide means, the coilable element is then led, sliding along the laying means (2), toward the stocking basket in such a way as to coil naturally under the effect of its longitudinal rigidity, characterised in that the coilable element (3) is introduced into the device, or respectively withdrawn from the device, through lateral openings (12A, 21A, 41A, 40A) of the basket (10), of the guide means (4) and of the laying means (2) in the case where said laying means is of rotary type.

2. Process for stocking according to claim 1, characterised in that driving of the rotary laying means (2) does not use any motorised means and is obtained by reaction to the advancing movement of the coilable element, due to the longitudinal rigidity of said element.

3. Stocking device (1) for coilable element (3) including a stocking basket (10) formed especially by an outer wall (12), disposed against the edge of a bottom (11) serving as winding base, a guide means (4), a fixed or rotary laying means (2), intended to lead angularly the element to be coiled (3) from the guide means (4) toward the stocking basket, characterised in that lateral openings (12A, 21A, 41A, 40A) are made in the outer wall (12), in the guide means (40A, 41A) and in the laying means (2) in the case where the laying means is of rotary type, for a lateral introduction of the coilable element (3).

4. Stocking device according to claim 3, characterised in that the laying means (2) is fixed and is made up of a convex cover of conical shape (20) disposed in the prolongation of an inner wall (13) of the basket (10).

5. Stocking device according to claim 3, characterised in that the laying means (2) is rotary and is made up of at least one essentially radial tubular segment (21) extending from a location close to one end of the guide means (4) into the stocking basket (10), said tubular segment being pivotal about an axis corresponding to the virtual axis (X-X) of the device.

6. Stocking device according to claim 5, characterised in that it does not comprise any motorised means for driving the laying means (2).

7. Stocking device according to one of the claims 5 or 6, characterised in that the rotary laying means (2) includes a means for braking (24) the tubular segment (21).

8. Stocking device according to one of the claims 5 to 7, characterised in that the rotary laying means (2) includes a means for adjusting in height (25) the end of the tubular segment (21) in the basket.

9. Stocking device according to claim 3, characterised in that at least one of the lateral openings (12A, 21A, 41A, 40A) is blockable.

10. Stocking device according to one of the claims 3 to 9, characterised in that the guide means (4) comprises at least one tubular segment (40) disposed essentially radially to the outside of said device, said tubular segment being pivotal about an axis corresponding to the virtual axis (XX) of said device.

11. Use of a stocking device (1) according to one of the claims 3 to 10 at the time of laying a cable, a first length of cable (30) having already been laid, a free length of cable (3) being introduced into the device (1) through the lateral openings (12A, 21A, 41A, 40A), the remaining length (31) of the cable then being coiled in the basket (10), then being taken out of said basket again to be laid, a last free length of the cable then being withdrawn from the device through the same lateral openings.

12. Use of a stocking device according to one of the claims 3 to 10 for the transwinding of a cable.

13. Use of a stocking device according to one of the modes corresponding to claims 11 or 12, wherein the cable includes at least one optical fibre.
